# EUROPÄISCHE PATENTSCHRIFT

(11) **EP 0 936 498 B1**
(45) Veröffentlichungstag und Bekanntmachung des Hinweises auf die Patenterteilung: **17.09.2003**
(21) Anmeldenummer: 98102363.3
(22) Anmeldetag: 11.02.1998
(51) Int. Cl.: G03B 27/58, B26D 1/20

(54) **Schneidvorrichtung für eine Materialbahn**
Cutting device for a web
Dispositif de coupe pour une bande

(43) Veröffentlichungstag der Anmeldung: 18.08.1999
(73) Patentinhaber: IMIP LLC, Wilmington, Delaware 19801 (US)
(72) Erfinder: Heller, Martin, CH-8050, Zürich (CH)
(74) Vertreter: Schwabe - Sandmair - Marx

(56) Entgegenhaltungen:
- EP-A- 0 084 347
- US-A- 3 657 952
- US-A- 4 376 399

## Beschreibung

Die Erfindung betrifft eine Schneidvorrichtung für eine Materialbahn gemäss dem Oberbegriff des unabhängigen Anspruchs. Insbesondere betrifft die Erfindung eine Schneidvorrichtung für fotografisches Kopiermaterial in einem fotografischen Kopiergerät.

Eine Schneiderorrichtung gemäss dem Oberbegriff des Anspruchs 1 wird Z.B von EP- 84 347 A offenbart.

In fotografischen Kopiergeräten, insbesondere sog. Minilabs, werden solche Schneidvorrichtungen insbesondere für grössere Papierbreiten häufig eingesetzt, weil sie gegenüber anderen Schneidvorrichtungen verschiedene Vorteile aufweisen. Wenn im Kopiergerät jedoch Kopierpapierbahnen unterschiedlicher Breiten verarbeitet werden, so sind die Schnittzeiten für schmälere Papierbahnen gleich lang wie bei der breitesten Papierbahn, für die die Schneidvorrichtung bzw. das Kopiergerät ausgelegt ist. Dies wird in zeitkritischen Anwendungsfällen als nachteilig empfunden.

Durch die vorliegende Erfindung soll nun eine Schneidvorrichtung der gattungsgemässen Art dahingehend verbessert werden, dass sie für schmälere Materialbahnen kürzere Schnittzeiten aufweist als für breitere Materialbahnen.

Die Lösung dieser der Erfindung zugrundeliegenden Aufgabe ergibt sich aus den im kennzeichnenden Teil des unabhängigen Anspruchs 1 beschriebenen Merkmalen der erfindungsgemässen Schneidvorrichtung.

Weitere vorteilhafte und besonders zweckmässige Ausgestaltungen der erfindungsgemässen Schneidvorrichtung sind in den abhängigen Ansprüchen beschrieben.

Im folgenden wird die Erfindung anhand der Zeichnung näher erläutert. Es zeigen:

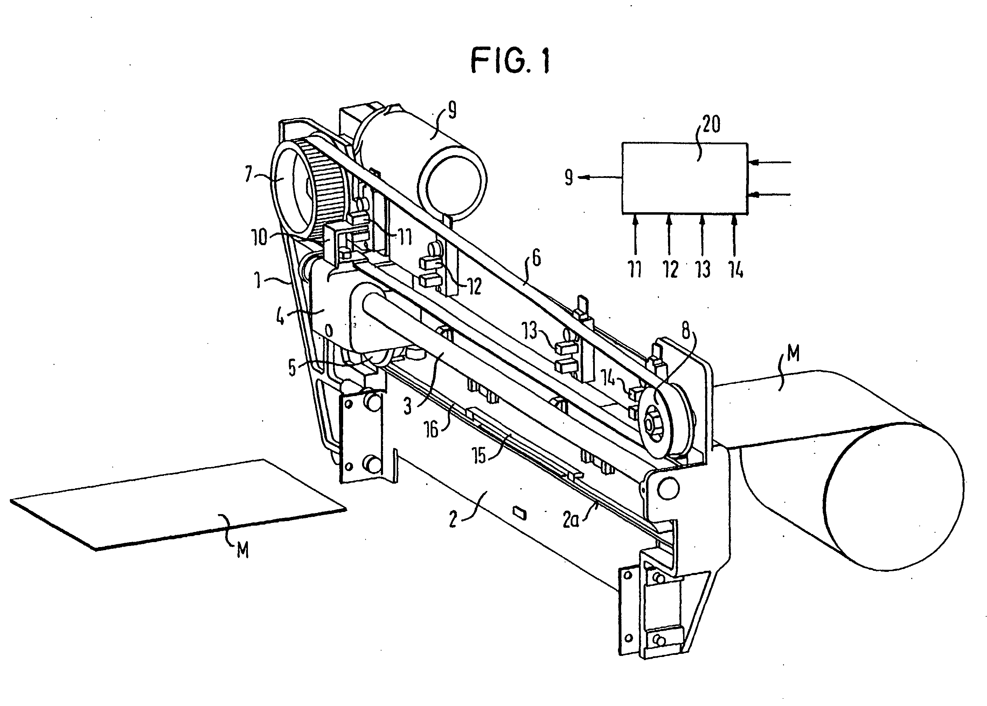

- Fig. 1: eine Gesamtansicht eines typischen Ausführungsbeispiels der erfindungsgemässen Schneidvorrichtung im Schrägriss,

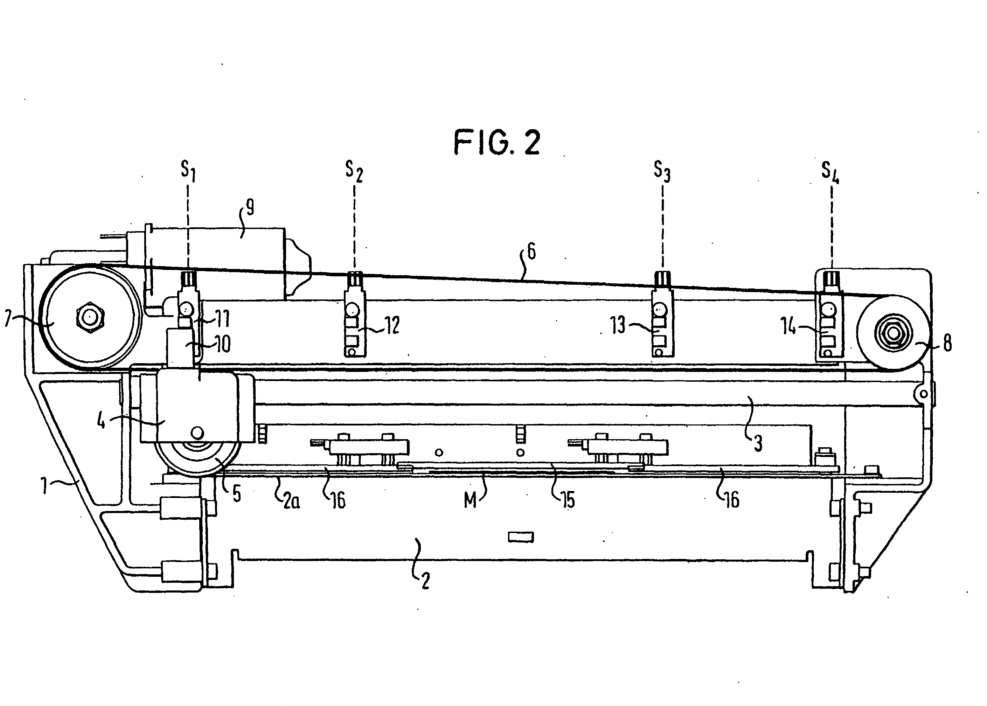

- Fig. 2: eine Vorderansicht der Schneidvorrichtung der Fig. 1,
- Fig. 3: eine Skizze zur Erläuterung der Funktionsweise der Schneidvorrichtung und
- Fig.4-5: zwei schematische Detailansichten zur Funktionserläuterung.

Die dargestellte Schneidvorrichtung umfasst einen Rahmen 1, an dem alle Komponenten montiert sind. Der Rahmen und damit die gesamte Schneidvorrichtung ist im praktischen Einsatz quer in der Bewegungsbahn einer zu schneidenden Materialbahn M angeordnet.

Im unteren Bereich des Rahmens befindet sich ein feststehender Träger 2, auf dessen oberem Rand ein Messerbalken 2a angeordnet ist. Darüber ist im Rahmen 1 eine Gleitschiene 3 montiert, an der ein Messerschlitten 4 verschiebbar gelagert ist. Im Messerschlitten 4 ist eine Messerrolle 5 drehbar gelagert, welche mit dem feststehenden Messerbalken 2a zusammenarbeitet. Der Messerschlitten 4 ist an einem Zahnriemen 6 befestigt, welcher um zwei Rollen 7 und 8 geschlungen ist. Die in der Zeichnung linke Rolle 7 ist von einem am Rahmen 1 montierten Antriebsmotor 9 angetrieben. Die Messerrolle 5 ist somit motorisch längs des Messerbalkens 2a hin- und herbeweglich. Soweit entspricht die dargestellte Schneidvorrichtung im wesentlichen dem Stand der Technik.

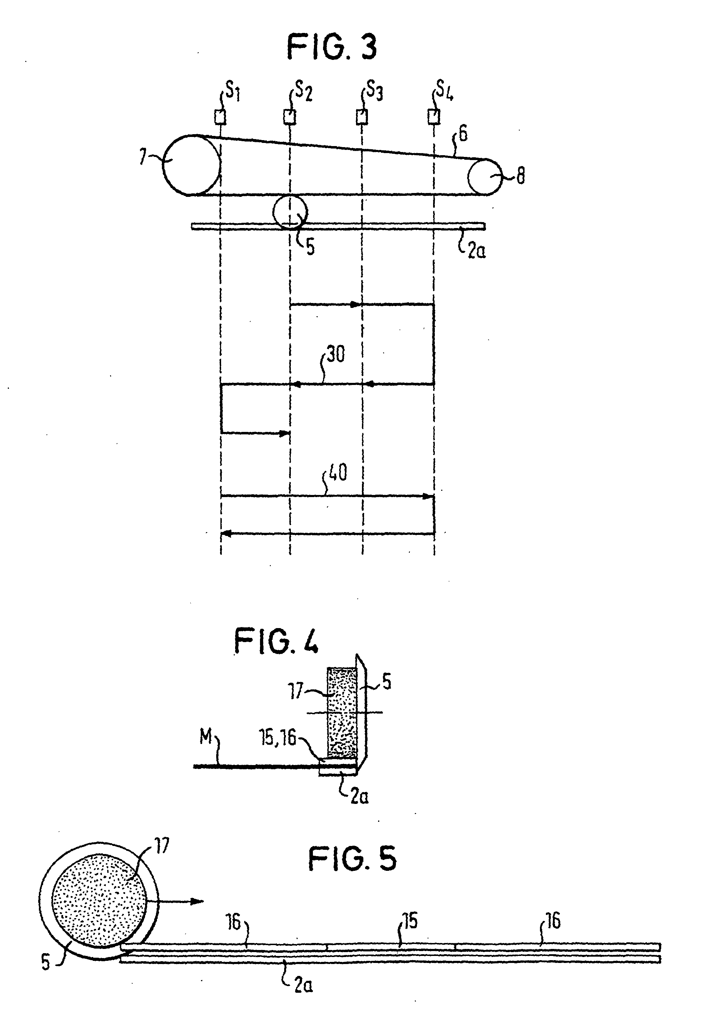

Längs des Bewegungspfads des Messerschlittens 4 sind am Rahmen 1 vier Lichtschranken 11, 12, 13 und 14 angeordnet, welche mit einer am Messerschlitten 4 angebrachten Fahne 10 zusammenarbeiten. Die vier Lichtschranken 11-14 arbeiten mit einer symbolisch durch den Kasten 20 dargestellten elektronischen Steuerung zusammen, welche ihrerseits den Antriebsmotor 9 und damit die Bewegung der Messerrolle 5 längs des Messerbalkens 2a steuert. Die vier Lichtschranken definieren vier Startpositionen S₁-S₄ (Fig.3) für die Messerrolle 5, wobei die beiden äusseren Startpositionen S₁ und S₄ gleichzeitig auch die Umkehrpositionen für die Hin- und Herbewegungen der Messerrolle 5 bilden. Die Steuerung 20 erhält von einer nicht dargestellten übergeordneten Steuerung die Information über die Breite der zu schneidenden Materialbahn sowie ein Startsignal für die Auslösung eines Schneidvorgangs. Selbstverständlich können die Steuerung 20 und die übergeordnete Steuerung auch in einer einzigen Steuerungseinrichtung zusammengefasst sein, welche beim Einsatz in einem fotografischen Kopiergerät auch durch die in diesem vorhandene Steuerung für die übrigen Komponenten desselben implementiert sein kann.

Gemäss dem Hauptgedanken der Erfindung ist die Schneidvorrichtung für unterschiedlich breite Materialbahnen mit unterschiedlichen Startpositionen für die Messerrolle 5 ausgestattet. Im dargestellten Ausführungsbeispiel wird nur zwischen zwei Materialbahnbreiten unterschieden, typischerweise etwa <= 4" und > 4". Für schmälere Materialbahnen (<= 4") sind die beiden inneren Startpositionen S₂ und S₃ massgebend, für breitere Materialbahnen (>4'') gelten die beiden äusseren, gleichzeitig die Umkehrpunkte der Bewegung definierenden Startpositionen S₁ und S₄. Die Startpositionen sind ausserdem jeweils einer Schnittrichtung (Bewegungsrichtung der Messerrolle 5) zugeordnet. Für die Schnittrichtung von links nach rechts in der Zeichnung gelten die Startpositionen S₁ und S₂ für breitere bzw. schmälere Materialbahnen, für die umgekehrte Schnittrichtung von rechts nach links gelten die Startpositionen S₄ und S₃ für breitere bzw. schmälere Materialbahnen.

Die Funktionsweise der Schneidvorrichtung und die Bewegungsabläufe der Messerrolle 5 gehen am besten aus Fig.3 hervor.

Es sei angenommen, dass zunächst eine schmälere Materialbahn (<=4'') geschnitten werden solle. Der Messerschlitten 4 und damit die Messerrolle 5 befinde sich dazu in der Startposition S₂. Sobald die abzuschneidende Länge der Materialbahn M über den Messerbalken 2 vorgeschoben wurde, wird von einer nicht dargestellten übergeordneten Steuerung ein Schnittzyklus ausgelöst. Dabei wird die Messerrolle 5 nach rechts zunächst bis zur Startposition S₃ bewegt, wobei die Materialbahn geschnitten wird, und von dort weiter bis zum Umkehrposition S₄ und schliesslich wieder zurück bis zur Startposition S₃ bewegt, wo sie bis zum nächsten Schnittzyklus verbleibt. Im nächsten Schnittzyklus wird die Messerrolle 5 ausgehend von der Startposition S₃ zunächst bis zur Startposition S₂ und von dort weiter bis zur Umkehrposition S₁ und schliesslich wieder zurück in die Startposition S₂ bewegt, wo sie bis zum Beginn des nächsten Schnittzyklus verbleibt. Der Bewegungsablauf für diese zwei Schnittzyklen ist in Fig. 3 durch die Linie 30 dargestellt.

Selbstverständlich wäre es auch möglich, bei den schmäleren Materialbahnen die Messerrolle 5 nur zwischen den beiden inneren Startpositionen S₂ und S₃ hin und her zu bewegen. Das Weiterbewegen nach dem Schnitt bis zur jeweils nächstliegenden Umkehrposition und wieder zurück in die innere Startposition hat jedoch den Vorteil, dass der Messerbalken nicht ungleichmässig abgenützt wird.

Bei breiteren Materialbahnen (>4'') wird die Messerrolle in an sich konventioneller Weise einfach zwischen den beiden Umkehrpositionen S₁ und S₄ als Startpositionen hin und her bewegt. Der Bewegungsablauf für diese zwei Schnittzyklen ist in Fig. 3 durch die Linie 40 dargestellt.

Für einen sauberen Schnitt ist es erforderlich, dass die Materialbahn M während des Schneidvorgangs gegen den Messerbalken 2a gedrückt wird. Gemäss der Erfindung sind dazu zwei von der Messerrolle 5 betätigbare Niederhalter 15 und 16 vorgesehen (Figuren 4 und 5). Der eine, innere Niederhalter 15 befindet sich im wesentlichen zwischen den beiden inneren Startpositionen S₂ und S₃, der andere, äussere Niederhalter 16 liegt in den beiden Bereichen zwischen jeweils einer inneren Startposition S₂ bzw. S₃ und der jeweils nächstliegenden Umkehrposition S₁ bzw. S₄, also zu beiden Seiten des inneren Niederhalters 15. Die beiden Niederhalter 15 und 16 bestehen im wesentlichen aus zum Messerbalken 2a parallelen Stäben, die in Ruhestellung von nicht gezeigten Federn in geringem Abstand oberhalb des Messerbalkens 2a gehalten werden. Die zu schneidende Materialbahn M wird zwischen dem Messerbalken 2a und den beiden Niederhaltern 15 und 16 hindurchgeführt.

Zur Betätigung der beiden Niederhalter 15 und 16 ist die Messerrolle 5 mit einer koaxialen Gummiwalze 17 etwas kleineren Durchmessers versehen. In den beiden Umkehrpositionen S₁ und S₄ ist die Gummiwalze 17 ausser Eingriff mit dem äusseren Niederhalter 16 (und natürlich auch dem inneren Niederhalter 15), die beiden Niederhalter 15 und 16 befinden sich also in ihrer Ruhestellung im Abstand zum Messerbalken 2a, so dass also ein Materialbahnvorschub über die gesamte zur Verfügung stehende Breite der Schneidvorrichtung möglich ist. Sobald die Messerrolle 5 nach innen bewegt wird, kommt die Gummiwalze 17 in Eingriff mit dem äusseren Niederhalter 16 und presst diesen nach unten gegen den Messerbalken 2a, wodurch die Materialbahn M festgeklemmt wird. Wenn die Messerrolle 5 über die beiden inneren Startpositionen S₂ bzw. S₃ weiter nach innen bewegt wird, wird auch der innere Niederhalter 15 in analoger Weise nach unten gepresst und umgekehrt. Wenn sich die Messerrolle 5 in einer der beiden inneren Startpositionen S₂ und S₃ befindet, ist die Gummiwalze 17 noch nicht in Eingriff mit dem inneren Niederhalter 15, so dass also eine schmälere Materialbahn eingeführt bzw. vorgeschoben werden kann.

Durch die erfindungsgemässe Anordnung von unterschiedlichen Startpositionen fiir Materialbahnen unterschiedlicher Breite sind Zeiteinsparungen bis über 50% möglich.

## Patentansprüche

1. Schneidvorrichtung fiir eine Materialbahn, insbesondere fotografisches Kopiermaterial in einem fotografischen Kopiergerät, mit einer Messerrolle (5) und einem Antrieb (3,4,6-9), um die Messerrolle (5) quer über die zu schneidende Materialbahn (M) zwischen zwei Umkehrpositionen (S₁,S₄) hin und zurück zu bewegen und dabei jeweils einen Schnitt durchzuführen, **dadurch gekennzeichnet, dass** für jede der beiden Schnittrichtungen mindestens zwei Startpositionen (S₁,S₂ bzw. S₃,S₄) vorgesehen und unterschiedlichen Breiten der Materialbahn (M) zugeordnet sind, und dass der Antrieb (3,4,6-9) die Schnittbewegung der Messerrolle (5) jeweils bei der der jeweiligen Materialbahnbreite für die eine Schnittrichtung zugeordneten Startposition (S₁,S₂ bzw. S₃,S₄) beginnt und die Messerrolle (5) nach dem Schnitt in die jeweils nächstliegende Umkehrposition (S₁,S₄) und von dieser in die der jeweiligen Materialbahnbreite für die andere Schnittrichtung zugeordnete Startposition (S₄,S₃ bzw. S₂,S₁) zurück bewegt, sofern die letztgenannte Startposition (S₄,S₃ bzw. S₂,S₁) nicht mit einer Umkehrposition (S₁,S₄) zusammenfällt.

2. Vorrichtung nach Anspruch 1, **dadurch gekennzeichnet, dass** zwei äussere, mit den Umkehrpositionen (S₁,S₄) zusammenfallende Startpositionen (S₁,S₄) und zwei zwischen diesen liegende innere Startpositionen (S₂,S₃) vorgesehen sind.

3. Vorrichtung nach Anspruch 2, **dadurch gekennzeichnet, dass** ein innerer und ein äusserer von der Messerrolle (5) betätigbarer Niederhalter (15,16) für die zu schneidende Materialbahn (M) vorgesehen sind, wobei der innere Niederhalter (15) zwischen den beiden inneren Startpositionen (S₂,S₃) angeordnet ist und der äussere Niederhalter (16) in den Bereichen zwischen je einer inneren Startposition (S₂,S₃) und der jeweils nächstliegenden äusseren Startposition (S₁,S₄) wirksam ist.

4. Vorrichtung nach einem der vorangehenden Ansprüche, **dadurch gekennzeichnet, dass** ein mit der Messerrolle (5) zusammenwirkender, feststehender Messerbalken (2a) vorgesehen ist, welcher sich im wesentlichen zwischen den beiden Umkehrpositionen (S₁,S₄) der Messerrolle (5) erstreckt.

## Claims

1. Cutting apparatus for a web of material, especially photographic printing material in a photographic printing machine, with a knife roller (5) and a drive mechanism (3, 4, 6-9) to move the knife roller (5) at right angles across the material web (M) that is to be cut, to and fro between two reversal positions (S₁, S₄), thereby performing one cut in each direction, **characterized in that** at least two start positions (S₁, S₂ and S₃, S₄ respectively) are provided for each of the two cutting directions and are assigned to different widths of the material web (M), and **in that** the drive mechanism (3, 4, 6-9) begins the cutting movement of the knife roller (5) on each occasion at the start position (S₁, S₂ and S₃, S₄ respectively) assigned to the material web width involved at the time for the first direction of cut and, after the cut, moves the knife roller (5) to the respective next nearest reversal position (S₁, S₄) and from this to the start position (S₄, S₃ and S₂, S₁ respectively) assigned to the material web width involved at the time for the other direction of cut, unless the latter start position (S₄, S₃ and S₂, S₁ respectively) coincides with a reversal position (S₁, S₄).

2. Apparatus according to Claim 1, **characterized in that** there are provided two outer start positions (S₁, S₄) coinciding with the reversal positions (S₁, S₄) and two inner start positions (S₂, S₃) situated between the latter.

3. Apparatus according to Claim 2, **characterized in that** an inner and an outer hold-down device (15, 16) capable of being operated by the knife roller (5) are provided for the material web that is to be cut (M), whereby the inner hold-down device (15) is arranged between the two inner start positions (S₂, S₃) and the outer hold-down device (16) acts in the regions between each of the inner start positions (S₂, S₃) and the respective next nearest outer start position (S₁, S₄).

4. Apparatus according to one of the foregoing Claims, **characterized in that** a fixed blade beam (2a) is provided, acting in conjunction with the knife roller (5), and extending essentially between the two reversal positions (S₁, S₄) of the knife roller (5).

## Revendications

1. Dispositif de coupe pour une bande de matériau, en particulier du matériau de tirage photographique dans une tireuse photographique, avec un rouleau à lame (5) et un entraînement (3, 4, 6 - 9), pour déplacer le rouleau à lame (5) transversalement sur la bande de matériau à couper (M) entre deux positions de renversement (S₁, S₄) aller et retour et effectuer ainsi respectivement une coupe, **caractérisé en ce qu'**au moins deux positions de départ (S₁, S₂ ou S₃, S₄) sont prévues pour chacun des deux sens de coupe et que différentes largeurs sont affectées à la bande de matériau (M) et que l'entraînement (3, 4, 6 - 9) commence le mouvement de coupe du rouleau à lame (5) respectivement à la position de départ affectée à la largeur de bande de matériau respective pour l'un des sens de coupe (S₁, S₂ ou S₃, S₄) et que le rouleau à lame (5) revient en arrière après la coupe dans la position de renversement (S₁, S₄) qui est située respectivement le plus près et de celle-ci dans la position de départ affectée à la largeur de bande de matériau respective pour l'autre sens de coupe (S₄, S₃ ou S₂, S₁), dans la mesure où la position de départ nommée en dernier (S₄, S₃ ou S₂, S₁) ne coïncide pas avec une position de renversement ((S₁, S₄).

2. Dispositif selon la revendication 1, **caractérisé en ce que** deux positions de départ (S₁, S₄) extérieures, coïncidant avec les positions de renversement (S₁, S₄) et deux positions de départ intérieures (S₂, S₃) situées entre celles-ci sont prévues.

3. Dispositif selon la revendication 2, **caractérisé en ce qu'**un serre-flan intérieur et un serre-flan extérieur (15, 16) actionnables par le rouleau à lame (5) sont prévus pour la bande de matériau à couper (M), le serre-flan intérieur (15) étant disposé entre les deux positions de départ intérieures (S₂, S₃) et le serre-flan extérieur (16) agissant dans les secteurs chacun entre une position de départ intérieure (S₂, S₃) et la position de départ extérieure (S₁, S₄) respectivement la plus proche.

4. Dispositif selon l'une quelconque des revendications précédentes, **caractérisé en ce qu'**une barre porte-lame fixe (2a), concourant avec le rouleau à lame (5), est prévue, barre qui s'étend essentiellement entre les deux positions de renversement (S₁, S₄) du rouleau à lame (5).
